# EUROPÄISCHE PATENTSCHRIFT

(11) **EP 3 510 618 B1**
(45) Veröffentlichungstag und Bekanntmachung des Hinweises auf die Patenterteilung: **05.08.2020**
(21) Anmeldenummer: 17764588.4
(22) Anmeldetag: 08.09.2017
(51) Int. Cl.: H01H 9/54

(54) **SCHUTZSCHALTGERÄT**
CIRCUIT BREAKER
DISJONCTEUR

(30) Priorität: 09.09.2016 DE 102016117005
(43) Veröffentlichungstag der Anmeldung: 17.07.2019
(73) Patentinhaber: Eaton Intelligent Power Limited, Dublin 4 (IE)
(72) Erfinder: ASKAN, Kenan, 1090 Wien (AT)
(74) Vertreter: Eaton IP Group EMEA
(86) Internationale Anmeldenummer: PCT/EP2017/072668
(87) Internationale Veröffentlichungsnummer: WO 2018/046708

(56) Entgegenhaltungen:
- EP-A2- 2 149 988
- WO-A1-2015/028634
- US-A- 3 558 910
- US-A1- 2008 143 462
- US-A1- 2015 371 799

## Beschreibung

Die Erfindung betrifft ein Schutzschaltgerät gemäß dem Oberbegriff des Patentanspruches 1.

Es ist ein entsprechendes Schutzschaltgerät aus der WO 2015/028634 A1 der Anmelderin bekannt. Ein derartiges sog. hybrides Schutzschaltgerät weist eine Halbleiterschaltungsanordnung auf, welche einen Gleichrichter in Graetzschaltung sowie ein, zwei oder mehr IGBTs aufweist. Weiters weist die betreffende Schaltung einen Snubber auf. Nachteilig an diesem Aufbau ist die große Anzahl erforderlicher Bauteile, welche neben dem bloßen Bauteilaufwand zu hohen Verlustleistungen führt. Hohe Verlustleistungen führen zu hoher Eigenerwärmung des Schutzschaltgeräts und zu einer Verringerung der Lebensdauer der Halbleiterbauteile.

Aufgrund der zahlreichen seriell geschalteten Bauteile weist die Halbleiterschaltungsanordnung weiters eine hohe Schleifeninduktanz auf, wodurch die Zeit vergrößert wird, innerhalb derer beim Abschalten des Schutzschaltgeräts der Strom auf die Halbleiterschaltungsanordnung kommutiert. Dadurch werden die Schaltkontakte des Bypassschalters durch den lang andauernden Schaltlichtbogen stark belastet.

Zudem führt die hohe Anzahl bipolarer Bauteile zu hohen Transienten bei Schaltvorgängen.

Die EP 2 149 988 A2, die US 3 558 910 A und die US 2015/371799 A1 zeigen die Äquivalenz monolithischer und diskreter Halbleiterbauteile. Keines dieser Dokumente betrifft einen Schutzschalter.

Aus der US 2008/143462 A1 geht ein Gleichstromschalter mit einem bidirektionalen Schalter hervor.

Aufgabe der Erfindung ist es daher ein Schutzschaltgerät der eingangs genannten Art anzugeben, mit welchem die genannten Nachteile vermieden werden können, welches einen geringen Bauteilaufwand und eine längere Lebensdauer aufweist, und welches mit geringem Aufwand herstellbar ist.

Erfindungsgemäß wird dies durch die Merkmale des Patentanspruches 1 erreicht.

Dadurch kann ein Schutzschaltgerät geschaffen werden, welches eine geringe Bauteilanzahl und eine einfache Fertigung aufweist. Dadurch kann der Bauteilaufwand für die Herstellung eines hybriden Schutzschaltgeräts erheblich reduziert werden. Dadurch kann weiters die Fertigungsqualität und Ausfallrate gesenkt werden.

Dadurch kann die Verlustleistung innerhalb des Schutzschaltgeräts deutlich gesenkt werden, wodurch die Eigenerwärmung gesenkt und die Lebensdauer des Schutzschaltgeräts erhöht werden kann.

Dadurch kann sowohl der Schleifenwiderstand, als auch die Schleifeninduktanz gesenkt werden, wodurch beim Abschalten die Zeit für das Kommutieren des Stromes vom Bypassschalter zur Halbleiterschaltungsanordnung verkürzt werden kann, wodurch sowohl die Belastung des Bypassschalters als auch der Halbleiterschaltungsanordnung gesenkt werden kann, und folglich die Lebensdauer des Schutzschaltgeräts gesteigert werden kann. Durch die erhebliche Reduktion der Bauteile der ersten Halbleiterschaltungsanordnung kann insbesondere die Induktivität erheblich gesenkt werden.

Dadurch können Transienten bei Schaltvorgängen verringert werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine Ausführungsform eines Schutzschaltgeräts gemäß dem Stand der Technik;
Fig. 2 eine erste Ausführungsform eines gegenständlichen Schutzschaltgeräts;
Fig. 3 eine zweite Ausführungsform eines gegenständlichen Schutzschaltgeräts;
Fig. 4 eine dritte Ausführungsform eines gegenständlichen Schutzschaltgeräts; und
Fig. 5 eine zeitliche Schaltsequenz einer bevorzugten Ausführungsform eines gegenständlichen Schutzschaltgeräts nach Fig. 1.

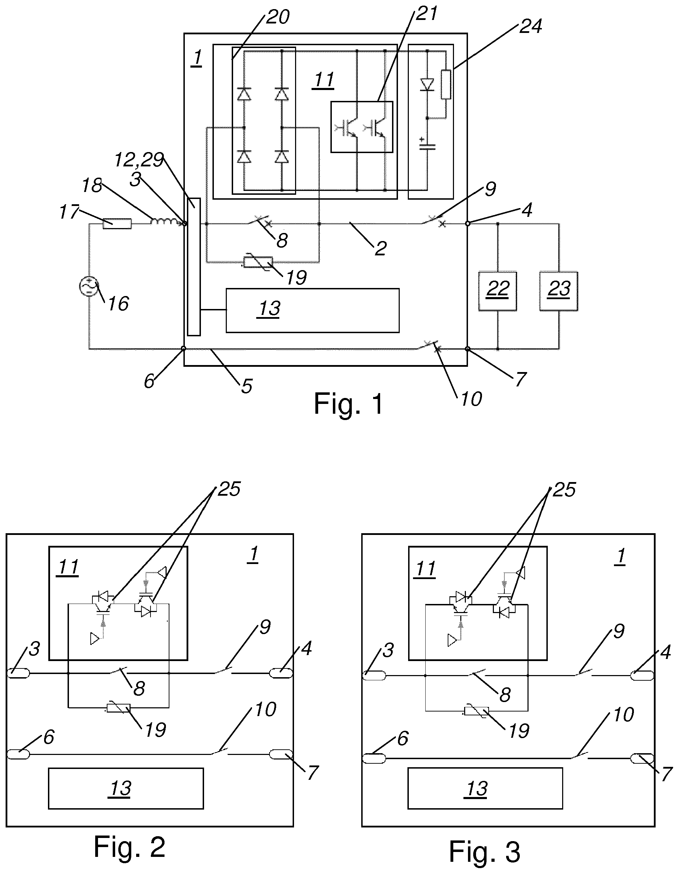

Die Fig. 2 bis 4 zeigen bevorzugte Ausführungsformen eines Schutzschaltgeräts 1 mit einer Außenleiterstrecke 2 von einem Außenleiterversorgungsanschluss 3 des Schutzschaltgeräts 1 zu einem Außenleiterlastanschluss 4 des Schutzschaltgeräts 1, und einer Neutralleiterstrecke 5 von einem Neutralleiteranschluss 6 des Schutzschaltgeräts 1 zu einem Neutralleiterlastanschluss 7 des Schutzschaltgeräts 1, wobei in der Außenleiterstrecke 2 ein mechanischer Bypassschalter 8 angeordnet ist, wobei eine, als vier Quadranten-Schalter ausgebildete, Halbleiterschaltungsanordnung 11 des Schutzschaltgeräts 1 parallel zum Bypassschalter 8 geschaltet ist, wobei in der Außenleiterstrecke 2 eine Strommessanordnung 12 angeordnet ist, welche mit einer elektronischen Steuereinheit 13 des Schutzschaltgeräts 1 verbunden ist, wobei die elektronische Steuereinheit 13 dazu ausgebildet ist, den Bypassschalter 8 und die Halbleiterschaltungsanordnung 11 vorgebbar zu betätigen, und wobei parallel zum Bypassschalter 8 ein spannungsabhängiger Widerstand 19, insbesondere ein Varistor, angeordnet ist, wobei die Halbleiterschaltungsanordnung 11, vorzugsweise lediglich, zwei diskrete Halbleiterbauteile aufweist.

Dadurch kann ein Schutzschaltgerät 1 geschaffen werden, welches eine geringe Bauteilanzahl und eine einfache Fertigung aufweist. Dadurch kann der Bauteilaufwand für die Herstellung eines hybriden Schutzschaltgeräts 1 erheblich reduziert werden. Dadurch kann weiters die Fertigungsqualität und Ausfallrate gesenkt werden.

Dadurch kann die Verlustleistung innerhalb des Schutzschaltgeräts 1 deutlich gesenkt werden, wodurch die Eigenerwärmung gesenkt und die Lebensdauer des Schutzschaltgeräts 1 erhöht werden kann.

Dadurch kann sowohl der Schleifenwiderstand, als auch die Schleifeninduktanz gesenkt werden, wodurch beim Abschalten die Zeit für das Kommutieren des Stromes vom Bypassschalter 8 zur ersten Halbleiterschaltungsanordnung 11 verkürzt werden kann, wodurch sowohl die Belastung des Bypassschalters 8 als auch der ersten Halbleiterschaltungsanordnung 11 gesenkt werden kann, und folglich die Lebensdauer des Schutzschaltgeräts 1 gesteigert werden kann. Durch die erhebliche Reduktion der Bauteile der ersten Halbleiterschaltungsanordnung 11 kann insbesondere die Induktivität erheblich gesenkt werden.

Dadurch können Transienten bei Schaltvorgängen verringert werden.

Die Schutzschaltgeräte 1 gemäß den Fig. 2 bis 4 können bis auf die Ausbildung der Halbleiterschaltungsanordnung 11 dem Schutzschaltgerät 1 gemäß Fig. 1 entsprechen.

Das Schutzschaltgerät 1 gemäß Fig. 1 weist wenigstens eine Außenleiterstrecke 2 sowie eine Neutralleiterstrecke 5 auf. Die Außenleiterstrecke 2 verläuft durch das Schutzschaltgerät 1 von einem Außenleiterversorgungsanschluss 3 zu einem Außenleiterlastanschluss 4. Die Neutralleiterstrecke 5 verläuft durch das Schutzschaltgerät 1 von einem Neutralleiteranschluss 6 zu einem Neutralleiterlastanschluss 7. Die betreffenden Anschlüsse 3, 4, 6, 7 sind jeweils bevorzugt als Schraubanschlussklemmen bzw. Steckanschlussklemmen ausgebildet, und in dem Schutzschaltgerät 1 von außen zugänglich angeordnet.

Bei dem gegenständlichen Schutzschaltgerät 1 handelt es sich bevorzugt um ein Niederspannungs-Schutzschaltgerät. Als Niederspannung wird wie an sich üblich der Bereich bis 1000V Wechselspannung bzw. 1500V Gleichspannung bezeichnet.

Das Schutzschaltgerät 1 weist bevorzugt ein Isolierstoffgehäuse auf.

In der Außenleiterstrecke 2 ist ein mechanischer Bypassschalter 8 angeordnet. Bevorzugt und wie dargestellt, ist in der Außenleiterstrecke 2 weiters ein erster mechanischer Trennschalter 9, insbesondere seriell zum Bypassschalter 8, angeordnet. In der Neutralleiterstrecke 5 ist bevorzugt ein zweiter mechanischer Trennschalter 10 angeordnet. Parallel zum Bypassschalter 8 ist eine Halbleiterschaltungsanordnung 11 geschaltet.

Weiters ist parallel zum Bypassschalter 8 ein spannungsabhängiger Widerstand 19 geschaltet, welcher insbesondere als Metall-Oxide-Varistor ausgebildet ist.

Das Schutzschaltgerät 1 weist weiters eine Strommessanordnung 12 auf, welche in der Außenleiterstrecke 2 angeordnet ist, und welche bevorzugt umfassend einem Shunt-Widerstand ausgebildet ist. Die Strommessanordnung 12 ist in den Fig. 2 bis 4 nicht dargestellt.

Die Strommessanordnung 12 ist mit einer elektronischen Steuereinheit 13 des Schutzschaltgeräts 1 verbunden, welche bevorzugt umfassend einen Mikrocontroller bzw. Mikroprozessor ausgebildet ist. Die elektronische Steuereinheit 13 ist dazu ausgebildet, den Bypassschalter 8 und die Halbleiterschaltungsanordnung 11, sowie vorzugsweise den ersten mechanischen Trennschalter 9 und den zweiten mechanischen Trennschalter 10 anzusteuern, daher diese vorgebbar zu betätigen bzw. zu schalten. Hiezu ist die elektronische Steuereinheit 13 mit der ersten Halbleiterschaltungsanordnung 11, sowie weiters mit, insbesondere elektromagnetischen, Betätigungselementen der mechanischen Schalter, daher des Bypassschalters 8, des ersten mechanischen Trennschalters 9 und des zweiten mechanischen Trennschalters 10 bevorzugt schaltungstechnisch verbunden. Die entsprechenden Verbindungen ausgehend von der elektronischen Steuereinheit 13 sind nicht in den Fig. 1 bis 4 dargestellt.

Die Halbleiterschaltungsanordnung 11 weist gemäß Stand der Technik, wie in Fig. 1 dargestellt, eine Gleichrichterschaltung 20 auf, welche bevorzugt als Vollbrücke ausgebildet ist, sowie zwei IGBT 21 als eigentliche Schalt- bzw. Regelelemente auf.

In Fig. 1 ist neben dem eigentlichen Schutzschaltgerät 1 weites die elektrische Umgebung angedeutet. Dabei ist das Versorgungsnetz durch die AC/DC-Netzspannungsquelle 16, den Netzinnenwiderstand 17 und die Netzinduktivität 18 dargestellt. Weiters ist eine elektrische Last 23, sowie ein elektrischer Fehler 22 in Form eines Kurzschlusses dargestellt.

Beim einem Schutzschaltgerät 1 gemäß Fig. 1 ist vorgesehen, dass ein Abschaltvorgang von dem Bypassschalter 8 und der ersten Halbleiterschaltungsanordnung 11 durchgeführt wird, und die ersten und zweiten Trennschalter 9, 10 lediglich dazu dienen, nach erfolgter Abschaltung eine galvanische Trennung des Lastkreises sicherzustellen.

Zum vorgegebenen, insbesondere manuell gesteuerten, Ab- zw. Ausschalten des Schutzschaltgeräts 1, insbesondere während des Betriebes des Schutzschaltgeräts 1 innerhalb des Nennstrombereichs, ist vorgesehen, dass der Bypassschalter 8 beim Nulldurchgang des Stromes ausgeschaltet bzw. geöffnet wird. Sofern die Last reaktiv, daher induktiv bzw. kapazitiv, ist, wird die Spannung beim Nulldurchgang des Stromes und folglich beim Abschalten nicht null sein. Die Höhe der Spannung ist dabei in bekannter Weise abhängig vom jeweiligen cos ϕ. Es ist vorgesehen nach dem Öffnen des Bypassschalters 8 und dem anschließenden Sperren der IGBT 21 den ersten und zweiten mechanischen Trennschalter 9, 10 zu öffnen, sobald der Strom durch das Schutzschaltgerät 1 klein genug ist, daher sobald der Strom einen vorgebbaren Grenzwert unterschreitet, bei Wechselstrom insbesondere im Bereich des Nulldurchganges. Dadurch kann die leckstrombedingte Erwärmung des Varistors auch bei stark reaktiven Lasten gering gehalten werden.

Es ist gegenständlich vorgesehen, dass die Halbleiterschaltungsanordnung 11 zwei diskrete Halbleiterbauteile bzw. Leistungshalbleiterbauteile aufweist. Dabei ist insbesondere vorgesehen, dass die Halbleiterschaltungsanordnung 11 lediglich bzw. genau zwei diskrete Halbleiterbauteile bzw. Leistungshalbleiterbauteile aufweist. Dies ist so zu verstehen, dass je nach Leistungsanforderungen auch zwei oder mehrere diskrete Halbleiterbauteile bzw. Leistungshalbleiterbauteile parallel geschaltet angeordnet sein können.

Gemäß den bevorzugten Ausführungsformen entsprechend den Fig. 2 und 3 ist dabei vorgesehen, dass die beiden diskreten Halbleiterbauteile jeweils als Reverse Conduction IGBT 25 ausgebildet sind. Reverse Conduction IGBT 25 weisen eine integrierte Reverse-Diode auf.

Die beiden diskreten Halbleiterbauteile sind antiseriell zueinander und parallel zum Bypassschalter 8 angeordnet. Gemäß Fig. 2 sind die beiden als Reverse Conduction IGBT 25 ausgebildeten diskreten Halbleiterbauteile in Common Emitter-Schaltung antiseriell angeordnet. Gemäß Fig. 3 sind die beiden als Reverse Conduction IGBT 25 ausgebildeten diskreten Halbleiterbauteile in Common Collector-Schaltung antiseriell angeordnet.

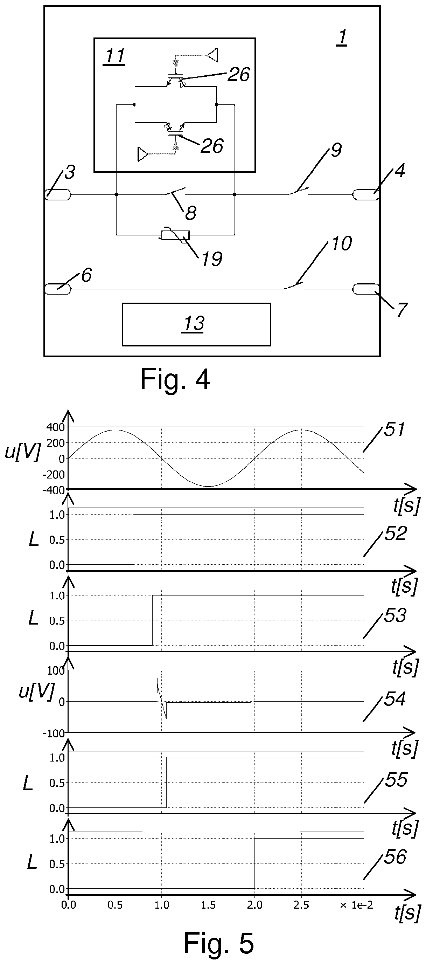

Gemäß der bevorzugten Ausführungsform entsprechend Fig. 4 ist vorgesehen, dass die beiden diskreten Halbleiterbauteile jeweils als Reverse Blocking IGBT 26 ausgebildet sind. Reverse Blocking IGBT 26 sind in der Lage hohen Reverse-Strömen zu widerstehen. Weiters sind diese in der Lage Ströme in beide Richtungen zu sperren, wenn das Bauteil ausgeschaltet ist.

Gemäß Fig. 4 sind die beiden als Reverse Blocking IGBT 26 ausgebildeten diskreten Halbleiterbauteile antiparallel zueinander und parallel zum Bypassschalter 8 angeordnet.

Gemäß einer bevorzugten Weiterbildung der gegenständlichen Erfindung ist vorgesehen, dass die elektronische Steuereinheit 13 dazu ausgebildet ist, beim Einschalten des Schutzschaltgeräts 1 erst den zweiten mechanischen Trennschalter 10 zum Schließen zu betätigen, nachfolgend den ersten mechanischen Trennschalter 9 zum Schließen zu betätigen, und eine vorgebbare erste Zeitdauer danach die Halbleiterschaltungsanordnung 11 einzuschalten.

Dadurch kann ein Schutzschaltgerät 1 geschaffen werden, welches eine geringe Baugröße und eine lange Lebensdauer aufweist und welches mit geringem Aufwand herstellbar ist.

Dadurch wird die Amplitude der Spannungsspitze, welcher der spannungsabhängige Widerstand 19 ausgesetzt ist, deutlich reduziert. Dadurch kann ein spannungsabhängiger Widerstand 19 bzw. ein Varistor, mit geringerer Nennspannung verwendet werden. Ein solcher weist gegenüber einem höher spannungsfesten Varistor einen geringeren Leckstrom auf, was im Betrieb zu einer geringeren Erwärmung des Schutzschaltgeräts 1 führt, wodurch die Lebensdauer dieses Bauteils, sowie der anderen Halbleiter in dessen Umgebung verlängert werden kann.

Dadurch können weiters bei den Leistungshalbleiterschaltern solche mit geringerer Kollektor-Emitter-Sperrspannung verwendet werden. Weiters können dadurch Dioden mit geringerer periodischer Spitzensperrspannung verwendet werden. Solche Bauteile weisen gegenüber höher belastbaren Bauteilen deutlich geringere Baugröße auf, und sind zudem weniger kostenintensiv. Dadurch können sowohl die Kosten und die Baugröße eines Schutzschaltgeräts 1 verringert werden, wobei gleichzeitig die Eigenerwärmung reduziert und entsprechend die Lebensdauer erhöht wird. Alternativ hiezu kann bei unveränderter Baugröße die elektrische Belastbarkeit eines Schutzschaltgeräts 1 deutlich vergrößert werden.

Leistungshalbleiter mit geringerer Kollektor-Emitter-Sperrspannung bzw. periodischer Spitzensperrspannung weisen weiters einen geringeren Innenwiderstand auf, wodurch im Falle eines Abschaltens eines Kurzschlussstromes die Zeit zum Konvertieren des sich aufbauenden Kurzschlussstromes vom Bypasszweig auf die erste Halbleiterschaltung 11 verringert werden kann. Dadurch kann die Belastung sowohl des Bypassschalters 8 als auch der ersten Halbleiterschaltungsanordnung 11 weiter verringert werden.

Durch die Verringerung der Baugröße, daher der physischen Fläche, der Leistungshalbleiter kann die Schleifeninduktanz der ersten Halbleiterschaltungsanordnung 11 deutlich verringert werden. Diese ist neben dem Widerstand ein weiterer Haupteinflussfaktor der Zeit zum Konvertieren des sich aufbauenden Kurzschlussstromes vom Bypasszweig auf die erste Halbleiterschaltungsanordnung 11, welche durch die Verringerung der physischen Fläche der Leistungshalbleiter weiter verringert wird.

Weiters wird dadurch die Höhe transienter Spannungsspitzen verringert, welche durch die internen Schaltvorgänge des Schutzschaltgeräts 1 von diesem ins Netz abgegeben werden.

Weiters kann dadurch ein Snubber 24 im Bereich der Halbleiterschaltungsanordnung 11 deutlich verkleinert bzw. gänzlich auf einen solchen verzichtet werden.

Zum Einschalten des Schutzschaltgeräts 1 ist vorgesehen, dass die elektronische Steuereinheit 13, welche entsprechend ausgebildet ist, erst den zweiten mechanischen Trennschalter 10 und nachfolgend den ersten mechanischen Trennschalter 9 derartig betätigt, dass deren Schaltkontakte geschlossen werden. Bevorzugt sind der erste und der zweite mechanische Trennschalter 9, 10 jeweils als Teil eines bistabilen Relais ausgebildet. Eine vorgebbare erste Zeitdauer danach schaltet die Steuereinheit 13 die Halbleiterschaltungsanordnung 11 ein.

Die erste Zeitdauer ist bevorzugt derart lange ist, dass Schaltkontakte des ersten mechanischen Trennschalters 9 und Schaltkontakte des zweiten mechanischen Trennschalters 10 einen mechanisch stationären Zustand erreicht haben. Daher, dass diese ohne Prellen sicher aneinander anliegen.

Es hat sich in der praktischen Umsetzung der gegenständlichen Erfindung gezeigt, dass die erste Zeitdauer zwischen 0,8 ms und 1,2 ms, insbesondere im Wesentlichen 1 ms, beträgt. Jedoch können diese Werte je nach Art des Einschaltwerkes des ersten und zweiten mechanischen Trennschalters 9, 10 variieren.

Das gegenständliche Schutzschaltgerät 1 ist dabei sowohl zum Betrieb an einem Gleichstromnetz bzw. an einem Wechselspannungsnetz vorgesehen bzw. ausgebildet sein.

Bei Ausbildung des Schutzschaltgeräts 1 als Wechselspannungsschaltgerät ist vorgesehen, dass dieses weiters eine Spannungsmessanordnung 29 aufweist, welche mit der Steuereinheit 13 verbunden ist, und dass die elektronische Steuereinheit 13 dazu ausgebildet ist, den ersten mechanischen Trennschalter 9 und den zweiten mechanischen Trennschalter 10 eine vorgebbare zweite Zeitdauer vor einem ersten Nulldurchgang einer angeschlossenen Netzspannung zu betätigen. Die Spannungsmessanordnung 29 ist in Fig. 1 lediglich zusammen mit der Strommessanordnung 12 dargestellt.

Energieversorgungsnetze mit einer alternierenden Wechselspannung sind in der Regel hinsichtlich deren Netzfrequenz sehr stabil, wobei Schwankungen zwischen unmittelbar aufeinander folgenden Nulldurchgängen äußerst gering ausfallen. Bevorzugt ist vorgesehen, dass vor dem eigentlichen Einschaltvorgang anhand einer vorgebbaren Anzahl an Nulldurchgängen eine aktuelle Periodenlänge des jeweiligen Netzes ermittelt wird. Dadurch ist ein derartiges Schutzschaltgerät 1 gleichermaßen und ohne weitere Einstellungen in Netzen unterschiedlicher Netzfrequenzen einsetzbar. Nach einigen Nulldurchgängen, insbesondere acht bis zwölf, kann ein ausreichend genauer Wert der Periodenlänge ermittelt werden. Sobald dies erfolgt ist, wird nach einem sog. nullten Nulldurchgang bis zum Versenden des Einschaltsignals für den ersten und zweiten mechanischen Trennschalter 9, 10 durch die elektronische Steuereinheit 13 die ermittelte Periodendauer weniger der zweiten Zeitdauer abgewartet. Derart können die beiden Trennschalter 9, 10 zum angegebenen Zeitpunkt vor dem ersten Nulldurchgang eingeschaltet werden.

Bevorzugt ist vorgesehen, dass die zweite Zeitdauer im Wesentlichen halb so lange ist wie die erste Zeitdauer. Dabei sind diese dann symmetrisch um den ersten Nulldurchgang herum angeordnet.

Bevorzugt ist weiters vorgesehen, dass die elektronische Steuereinheit 13 dazu ausgebildet ist, an einem, dem ersten Nulldurchgang unmittelbar nachfolgenden zweiten Nulldurchgang der Netzspannung den Bypassschalter 8 einzuschalten.

Fig. 5 zeigt einen entsprechenden Einschaltvorgang in sechs Diagrammen 51, 52, 53, 54, 55, 56. Dabei zeigt das erste Diagramm 51 den Verlauf der Netzspannung, welche auch als Sourcevoltage bezeichnet werden kann. Das zweite Diagramm 52 zeigt das logische Ein-Ausschaltsignal des zweiten mechanischen Trennschalters 10, wobei der mit L bezeichnete logische Wert 1, wie auch in den Diagrammen 53, 55 und 56, repräsentativ für "EIN" und der logische Wert 0 repräsentativ für "AUS" steht. Das dritte Diagramm 53 zeigt das logische Ein-Ausschaltsignal des ersten mechanischen Trennschalters 9. Das vierte Diagramm 54 zeigt den Verlauf der Spannung am spannungsabhängigen Widerstand 19. Das fünfte Diagramm 55 zeigt das logische Ein-Ausschaltsignal der Leistungshalbleiter 25, 26. Das sechste Diagramm 56 zeigt das logische Ein-Ausschaltsignal des Bypassschalters 8.

Durch die gegenständlichen Maßnahmen kann die Halbleiterschaltungsanordnung 11 auch dämpfungsgliedfrei ausgebildet ist, wodurch weitere Bauteile eingespart werden können, und wodurch es im Einschaltvorgang vermieden werden kann, einen Kondensator aufladen zu müssen. Dadurch zieht die Halbleiterschaltungsanordnung 11 im Einschaltvorgang weniger Strom. Ein entsprechendes Dämpfungslied, welches auch als Snubber 24 bezeichnet wird, ist in Fig.1 eingezeichnet.

Gemäß einer bevorzugen Weiterführung ist vorgesehen, dass der spannungsabhängige Widerstand 19 als Thermofuse-Varistor ausgebildet ist, wodurch die Betriebssicherheit weiter gesteigert werden kann.

## Patentansprüche

1. Schutzschaltgerät (1) mit zumindest einer Außenleiterstrecke (2) von einem Außenleiterversorgungsanschluss (3) des Schutzschaltgeräts (1) zu einem Außenleiterlastanschluss (4) des Schutzschaltgeräts (1), und einer Neutralleiterstrecke (5) von einem Neutralleiteranschluss (6) des Schutzschaltgeräts (1) zu einem Neutralleiterlastanschluss (7) des Schutzschaltgeräts (1), wobei in der Außenleiterstrecke (2) ein mechanischer Bypassschalter (8) angeordnet ist, wobei eine, als vier Quadranten-Schalter ausgebildete, Halbleiterschaltungsanordnung (11) des Schutzschaltgeräts (1) parallel zum Bypassschalter (8) geschaltet ist, wobei in der Außenleiterstrecke (2) eine Strommessanordnung (12) angeordnet ist, welche mit einer elektronischen Steuereinheit (13) des Schutzschaltgeräts (1) verbunden ist, wobei die elektronische Steuereinheit (13) dazu ausgebildet ist, den Bypassschalter (8) und die Halbleiterschaltungsanordnung (11) vorgebbar zu betätigen, und wobei parallel zum Bypassschalter (8) ein spannungsabhängiger Widerstand (19), insbesondere ein Varistor, angeordnet ist, wobei die Halbleiterschaltungsanordnung (11), vorzugsweise lediglich, zwei Halbleiterbauteile aufweist, wobei in der Außenleiterstrecke (2) ein erster mechanischer Trennschalter (9), insbesondere seriell zum Bypassschalter (8), angeordnet ist, wobei in der Neutralleiterstrecke (5) ein zweiter mechanischer Trennschalter (10) angeordnet ist, wobei die elektronische Steuereinheit (13) dazu ausgebildet ist, beim Einschalten des Schutzschaltgeräts (1) erst den zweiten mechanischen Trennschalter (10) zum Schließen zu betätigen, nachfolgend den ersten mechanischen Trennschalter (9) zum Schließen zu betätigen, und eine vorgebbare erste Zeitdauer danach die Halbleiterschaltungsanordnung (11) einzuschalten, wobei das Schutzschaltgerät (1) als Wechselspannungsschaltgerät ausgebildet ist, und weiters eine Spannungsmessanordnung (29) aufweist, welche mit der Steuereinheit (13) verbunden ist, und wobei die elektronische Steuereinheit (13) dazu ausgebildet ist, den ersten mechanischen Trennschalter (9) und den zweiten mechanischen Trennschalter (10) eine vorgebbare zweite Zeitdauer vor einem ersten Nulldurchgang einer angeschlossenen Netzspannung zu betätigen, **dadurch gekennzeichnet, dass** die zwei Halbleiterbauteile diskrete Halbleiterbauteile sind, und dass die zweite Zeitdauer im Wesentlichen halb so lange ist wie die erste Zeitdauer.

2. Schutzschaltgeräts (1) nach Anspruch 1, **dadurch gekennzeichnet, dass** die beiden diskreten Halbleiterbauteile jeweils als Reverse Conduction IGBT ausgebildet sind.

3. Schutzschaltgeräts (1) nach Anspruch 2, **dadurch gekennzeichnet, dass** die beiden diskreten Halbleiterbauteile antiseriell zueinander und parallel zum Bypassschalter (8) angeordnet sind.

4. Schutzschaltgeräts (1) nach Anspruch 1, **dadurch gekennzeichnet, dass** die beiden diskreten Halbleiterbauteile jeweils als Reverse Blocking IGBT ausgebildet sind.

5. Schutzschaltgeräts (1) nach Anspruch 4, **dadurch gekennzeichnet, dass** die beiden diskreten Halbleiterbauteile antiparallel zueinander und parallel zum Bypassschalter (8) angeordnet sind.

6. Schutzschaltgerät (1) nach einem der Ansprüche 1 bis 5, **dadurch gekennzeichnet, dass** die erste Zeitdauer zwischen 0,8 ms und 1,2 ms, insbesondere im Wesentlichen 1 ms, beträgt.

7. Schutzschaltgerät (1) nach einem der Ansprüche 1 bis 6, **dadurch gekennzeichnet, dass** die elektronische Steuereinheit (13) dazu ausgebildet ist, an einem, dem ersten Nulldurchgang unmittelbar nachfolgenden zweiten Nulldurchgang der Netzspannung den Bypassschalter (8) einzuschalten.

8. Schutzschaltgerät (1) nach einem der Ansprüche 1 bis 7, **dadurch gekennzeichnet, dass** der spannungsabhängige Widerstand (19) als Thermofuse-Varistor ausgebildet ist.

9. Schutzschaltgerät (1) nach einem der Ansprüche 1 bis 8, **dadurch gekennzeichnet, dass** die Halbleiterschaltungsanordnung (11) dämpfungsgliedfrei ausgebildet ist.

## Claims

1. Protective switching device (1) having at least one outer conductor section (2) from an outer conductor supply connection (3) of the protective switching device (1) to an outer conductor load connection (4) of the protective switching device (1), and a neutral conductor section (5) from a neutral conductor connection (6) of the protective switching device (1) to a neutral conductor load connection (7) of the protective switching device (1), wherein in the outer conductor section (2) a mechanical bypass switch (8) is arranged, wherein a semiconductor circuit arrangement (11) of the protective switching device (1), which semiconductor circuit arrangement is in the form of a four-quadrant switch, is connected in parallel with the bypass switch (8), wherein a current measuring arrangement (12) is arranged in the outer conductor section (2), which is connected to an electronic control unit (13) of the protective switching device (1), wherein the electronic control unit (13) is designed to actuate the bypass switch (8) and the semiconductor circuit arrangement (11) in a predeterminable manner, and wherein a voltage-dependent resistor (19), in particular, a varistor, is arranged in parallel with the bypass switch (8), wherein the semiconductor circuit arrangement (11) preferably has only two semiconductor components, wherein in the outer conductor section (2) a first mechanical isolating switch (9) is arranged in particular in series with the bypass switch (8), wherein in the neutral conductor section (5) a second mechanical isolating switch (10) is arranged, wherein when turning on the protective switching device (1) the electronic control unit (13) is designed to actuate only the second mechanical isolating switch (10) for closing, subsequently to actuate the first mechanical isolating switch (9) for closing, and then to turn on the semiconductor circuit arrangement (11) for a predeterminable first time period, wherein the protective switching device (1) is designed as an alternating voltage switching device, and furthermore has a voltage measuring arrangement (29), which is connected to the control unit (13), and wherein the electronic control unit (13) is designed to actuate the first mechanical isolating switch (9) and the second mechanical isolating switch (10) for a predeterminable second time period before a first zero crossing of a connected mains voltage, **characterised in that** the two semiconductor components are discrete semiconductor components and that the second time period is essentially half as long as the first time period.

2. Protective switching device (1) according to claim 1, **characterised in that** the two discrete semiconductor components are in each case designed as reverse conduction IGBT.

3. Protective switching device (1) according to claim 2, **characterised in that** the two discrete semiconductor components are arranged anti-serially to one another and parallel to the bypass switch (8).

4. Protective switching device (1) according to claim 1, **characterised in that** the two discrete semiconductor components are in each case designed as reverse blocking IGBT.

5. Protective switching device (1) according to claim 4, **characterised in that** the two discrete semiconductor components are arranged anti-parallel to one another and parallel to the bypass switch (8).

6. Protective switching device (1) according to any one of claims 1 to 5, **characterised in that** the first time period is between 0.8 ms and 1.2 ms, in particular, substantially 1 ms.

7. Protective switching device (1) according to any one of claims 1 to 6, **characterised in that** the electronic control unit (13) is designed to turn on the bypass switch (8) at a second zero crossing of the mains voltage immediately following the first zero crossing.

8. Protective switching device (1) according to any one of claims 1 to 7, **characterised in that** the voltage-dependent resistor (19) is designed as a thermofuse varistor.

9. Protective switching device (1) according to any one claims 1 to 8, **characterised in that** the semiconductor circuit arrangement (11) is designed to be free of damping elements.

## Revendications

1. Disjoncteur (1) avec au moins une ligne de conducteur extérieur (2) d'une borne d'alimentation de conducteur extérieur (3) du disjoncteur (1) à une borne de charge de conducteur extérieur (4) du disjoncteur (1), et une ligne de conducteur neutre (5) d'une borne de conducteur neutre (6) du disjoncteur (1) à une borne de charge du conducteur neutre (7) du disjoncteur (1), dans lequel un commutateur de dérivation mécanique (8) est disposé dans la ligne de conducteur extérieur (2), dans lequel un circuit semiconducteur (11), se présentant sous la forme d'un commutateur à quatre quadrants, du disjoncteur (1) est monté en parallèle avec le commutateur de dérivation (8), dans lequel un dispositif de mesure de courant (12) connecté à une unité de commande électronique (13) du disjoncteur (1) est disposé dans la ligne de conducteur extérieur (2), dans lequel l'unité de commande électronique (13) est conçue pour actionner le commutateur de dérivation (8) et dans lequel le circuit semiconducteur (11) de manière prédéfinie, une résistance (19), dépendante de la tension, notamment une varistance, est montée parallèlement avec le commutateur de dérivation (8), dans lequel le circuit semiconducteur (11) ne présente de préférence que deux composants semiconducteurs, dans lequel un premier sectionneur mécanique (9) est disposé dans la ligne de conducteur extérieur (2), en particulier en série avec le commutateur de dérivation (8), dans lequel un deuxième sectionneur mécanique (10) est disposé dans la ligne de conducteur neutre (5), dans lequel l'unité de commande électronique (13) est conçue, lorsque le disjoncteur (1) est mis en marche, d'abord pour actionner le deuxième sectionneur mécanique (10) pour la fermeture, puis pour actionner le premier sectionneur mécanique (9) pour la fermeture, et par la suite pour mettre en marche le circuit semiconducteur (11) pendant une première durée prédéterminable, dans lequel le disjoncteur (1) est conçu comme un dispositif de commutation à tension alternative, et présente en outre un dispositif de mesure de tension (29) qui est relié l'unité de commande (13), et dans lequel l'unité de commande électronique (13) est conçue pour faire fonctionner le premier sectionneur mécanique (9) et le second sectionneur mécanique (10) pendant une deuxième durée prédéterminable avant un premier passage par zéro d'une tension d'alimentation connectée, **caractérisé en ce que** les deux composants semiconducteurs sont des composants semiconducteurs discrets, et **en ce que** la deuxième durée est sensiblement deux fois plus longue que la première durée.

2. Disjoncteur (1) selon la revendication 1, **caractérisé en ce que** les deux composants semiconducteurs discrets sont chacun formés en tant qu'IGBT à conduction inverse.

3. Disjoncteur (1) selon la revendication 2, **caractérisé en ce que** les deux composants semiconducteurs discrets sont disposés de manière antisérielle l'un par rapport à l'autre et parallèlement au commutateur de dérivation (8).

4. Disjoncteur (1) selon la revendication 1, **caractérisé en ce que** les deux composants semiconducteurs discrets sont chacun formés en tant qu'IGBT à blocage inverse.

5. Disjoncteur (1) selon la revendication 4, **caractérisé en ce que** les deux composants semiconducteurs discrets sont disposés de manière antiparallèle l'un par rapport à l'autre et parallèlement au commutateur de dérivation (8).

6. Disjoncteur (1) selon l'une quelconque des revendications 1 à 5, **caractérisé en ce que** la première durée est comprise entre 0,8 ms et 1,2 ms, en particulier sensiblement 1 ms.

7. Disjoncteur (1) selon l'une quelconque des revendications 1 à 6, **caractérisé en ce que** l'unité de commande électronique (13) est conçue pour mettre en marche le commutateur de dérivation (8) lors d'un deuxième passage par zéro de la tension d'alimentation immédiatement après le premier passage par zéro.

8. Disjoncteur (1) selon l'une quelconque des revendications 1 à 7, **caractérisé en ce que** la résistance (19) dépendant de la tension est conçue en tant que varistance thermofusible.

9. Disjoncteur (1) selon l'une quelconque des revendications 1 à 8, **caractérisé en ce que** le circuit semiconducteur (11) est conçu sans atténuateur.
